# EUROPÄISCHE PATENTSCHRIFT

(11) **EP 1 837 941 B1**
(45) Veröffentlichungstag und Bekanntmachung des Hinweises auf die Patenterteilung: **30.11.2011**
(21) Anmeldenummer: 07100089.7
(22) Anmeldetag: 04.01.2007
(51) Int. Cl.: H01M 8/04, H01M 8/10

(54) **Verfahren zur Lokalisierung einer mangelhaften Betriebsgasversorgung einer Brennstoffzelle in einer Brennstoffzellenanordnung**
Method for detecting insufficient gas supply for a fuel cell in a fuel cell system
Méthode pour détecter une alimentation en gaz insuffisante dans une cellule à combustible d'un assemblage de piles à combustible

(30) Priorität: 17.03.2006 DE 102006012403
(43) Veröffentlichungstag der Anmeldung: 26.09.2007
(73) Patentinhaber: SIEMENS AKTIENGESELLSCHAFT, 80333 München (DE)
(72) Erfinder: Coerlin, Detlev, DECEASED (DE); Stühler, Walter, 96114 Hirschaid (DE); Voitlein, Ottmar, 91475 Lonnerstadt (DE)

(56) Entgegenhaltungen:
- EP-A- 1 283 557
- EP-A- 1 487 044
- EP-B1- 1 444 746

## Beschreibung

Die Erfindung betrifft ein Verfahren zur Lokalisierung einer mangelhaften Betriebsgasversorgung einer Brennstoffzelle in einer Brennstoffzellenanordnung gemäß Patentanspruch 1.

In einer Brennstoffzelle wird durch die elektrochemische Verbindung von Wasserstoff (H2) und Sauerstoff (O2) an einem Elektrolyten zu Wasser (H2O) elektrischer Strom mit hohem Wirkungsgrad erzeugt. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal etwa 1,1 V. Daher wird eine Vielzahl von Brennstoffzellen zu einer Brennstoffzellenanordnung zusammengeschlossen, bei röhrenförmigen Brennstoffzellen beispielsweise zu einem Röhrenbündel oder bei planaren Brennstoffzellen zu einem Stapel, der Bestandteil eines Brennstoffzellenblocks ist. Durch das In-Reihe-Schalten der Brennstoffzellen der Anordnung kann die Betriebsspannung der Brennstoffzellenanordnung 100 V und mehr betragen.

Eine Brennstoffzelle weist einen Elektrolyten auf, der - je nach technischer Ausführung - entweder für Wasserstoff- oder für Sauerstoffionen durchlässig ist. An eine Seite des Elektrolyten grenzt eine Anode und an diese wiederum ein Anodengasraum an. An die andere Seite des Elektrolyten grenzt die Kathode der Brennstoffzelle an, der der Kathodengasraum der Brennstoffzelle benachbart ist. Durch eine Verbundleiterplatte, die die Anode einer ersten Brennstoffzelle mit der Kathode einer dieser ersten Brennstoffzelle benachbarten Brennstoffzelle elektrisch verbindet - oder eine anders geartete elektrische Verbindung durch einen sogenannten Interconnector - wird ein In-Reihe-Schalten mehrerer Brennstoffzellen ermöglicht.

Während des Betriebs werden einer Brennstoffzelle ein wasserstoffhaltiges Gas - im Folgenden Brenngas genannt - und ein sauerstoffhaltiges Gas - im Folgenden Oxidationsgas genannt - zugeführt. Diese beiden Gase werden im Folgenden als Betriebsgase bezeichnet. Als Brenngas findet beispielsweise Methan, Erdgas, Kohlegas oder auch reiner Wasserstoff (H2) Verwendung. Als Oxidationsgas wird in der Regel Luft, aber auch reiner Sauerstoff (02) verwendet. Zum Betrieb der Brennstoffzelle wird das Brenngas in den Anodengasraum der Brennstoffzelle geführt, von wo es durch die gasdurchlässige Anode zum Elektrolyten gelangt. Das Oxidationsgas wird in den Kathodengasraum der Brennstoffzelle geleitet und dringt von dort durch die ebenfalls gasdurchlässige Kathode auch zum Elektrolyten vor. Je nach Durchlässigkeit des Elektrolyten für Sauerstoff- oder Wasserstoffionen werden die Sauerstoffionen aus dem Oxidationsgas und die Wasserstoffionen aus dem Brenngas an der einen oder anderen Seite des Elektrolyten zusammengeführt, wodurch dann durch die elektrochemische Verbindung von Wasserstoff und Sauerstoff zu Wasser Strom und auch Wärme erzeugt wird.

Aus der EP 1 487 044 A2 ist ein Verfahren zur Ermittlung eines Gaslecks zwischen den beiden Gasräumen von Brennstoffzellen bekannt, bei dem in einem ersten Schritt der Anodengasraum der Brennstoffzellen mit einem Brenngas und der Kathodengasraum der Brennstoffzellen mit einem Oxidationsgas beaufschlagt wird. In einem zweiten Schritt wird die Betriebsgaszufuhr zu beiden Gasräumen unterbrochen und der Anodengasraum mit einem Inertgas gespült. Dabei wird der zeitliche Verlauf der Zellspannung der Brennstoffzellen überwacht. Eine defekte Zelle zeichnet sich hierbei durch einen deutlich schnelleren Abfall der Zellspannung im Vergleich zu einer intakten Brennstoffzelle aus.

Aus der EP 1 444 746 B1 ist ein Verfahren zur Ermittlung eines Gaslecks zwischen den beiden Gasräumen von Brennstoffzellen bekannt, das sich von dem durch die EP 1 487 044 A2 bekannten Verfahren dadurch unterscheidet, dass statt des Anodengasraumes der Kathodengasraum gespült wird.

Beim Betrieb einer Brennstoffzellenanordnung mit Brennstoffzellen, deren Gasräume parallel mit den Betriebsgasen versorgt werden, müssen die Gasräume der Brennstoffzellen möglichst gleichmäßig mit den Betriebsgasen versorgt werden. Wird eine der Brennstoffzellen schlechter als die anderen Brennstoffzellen mit einem Betriebgas versorgt, so führt dies dazu, dass die Zellspannung dieser Brennstoffzelle deutlich unter dem Niveau der anderen liegt. Derartige Betriebsbedingungen können längerfristig zu einer irreversiblen Reduzie-der Leistungsfähigkeit der unterversorgten Brennstoffzelle führen.

Für eine gleichmäßige Betriebsgasversorgung müssen sämtliche Brennstoffzellen einen gleichen Strömungswiderstand aufweisen. Weist eine Brennstoffzelle einen im Vergleich zu den anderen Brennstoffzellen größeren Strömungswiderstand auf, so kann dies zu einer mangelhaften Betriebsgasversorgung der Brennstoffzelle führen. Ein abweichender Strömungswiderstand und somit eine mangelhafte Betriebsgasversorgung einer Brennstoffzelle kann beispielsweise verursacht werden durch Verspannungen beim mechanischen Aufbau der Brennstoffzellenanordnung, wodurch es z.B. zu einer Verringerung des Querschnittes von Betriebsgasversorgungs- oder -entsorgungskanälen kommt. Eine andere Ursache für einen abweichenden Strömungswiderstand und somit eine Ungleichversorgung der Brennstoffzellen der Brennstoffzellenanordnung sind Ablagerungen von Fremdstoffen in der Brennstoffzelle. Eine mangelhafte Betriebsgasversorgung kann aber auch durch Defekte in der Struktur der der Membran-Elektrodeneinheit begründet sein. Hierzu zählen beispielsweise defekte Poren in der 3-Phasen-Grenzschicht von Elektrode, Katalysator und Membran, die Bildung von Wasserfilmen zwischen Elektrode und Membran oder eine fehlerhafte Hydrophilität.

Es ist deshalb Aufgabe vorliegender Erfindung, ein Verfahren anzugeben, mit dem eine mangelhafte Betriebsgasversorgung einer Brennstoffzelle in einer Brennstoffzellenanordnung lokalisiert werden kann.

Diese Aufgabe wird durch ein Verfahren gemäß Patentanspruch 1 gelöst. Vorteilhafte Ausgestaltungen des Verfahrens sind jeweils Gegenstand der Unteransprüche.

Das erfindungsgemäße Verfahren sieht vor, dass
a) der Anodengasraum der Brennstoffzellen mit einem Brenngas und der Kathodengasraum der Anzahl von Brennstoffzellen mit einem Oxidationsgas beaufschlagt wird,
b) die Betriebsgaszufuhr zu beiden Gasräumen der Brennstoffzellen unterbrochen wird,
c) einer der beiden Gasräume der Brennstoffzellen mit einem Inertgas gespült wird,
d) der zeitliche Verlauf der Zellspannung der Brennstoffzellen überwacht wird.

Wenn der Anodengasraum der Brennstoffzellen mit einem Brenngas und der Kathodengasraum der Brennstoffzellen mit einem Oxidationsgas beaufschlagt wird, baut sich in allen Brennstoffzellen eine bestimmte Zellenspannung auf. Wird nun die Betriebsgaszufuhr zu beiden Gasräumen der Brennstoffzellen unterbrochen und einer der beiden Gasräume der Brennstoffzellen mit einem Inertgas gespült, so baut sich die Zellenspannung langsam ab. Der Grund hierfür ist, dass bei der Spülung mit dem Inertgas das in dem Gasraum noch vorhandene Betriebsgas von dem Inertgas verdrängt und aus dem Gasraum abgeführt wird und somit nicht mehr für eine elektrochemische Reaktion mit dem in dem nicht gespülten Gasraum vorhandenen Betriebsgas zu Verfügung steht. Durch die Abnahme des Betriebsgases in dem gespülten Gasraum sinkt somit die Ausgangsspannung der Brennstoffzelle ab.

Wie sich herausgestellt hat, dauert es bei einer defekten Brennstoffzelle, d.h. einer Brennstoffzelle mit einer mangelhaften Betriebsgasversorgung auf der von dem Inertgas gespülten Seite, länger als bei einer intakten Brennstoffzelle, bis das Inertgas das Betriebsgas verdrängen kann, d.h. die Ausgangsspannung einer defekten Brennstoffzellen fällt deutlich langsamer ab als die einer intakten Brennstoffzelle.

Eine defekte Brennstoffzelle ist somit durch einen langsameren Abfall der Ausgangsspannung erkennbar. Durch die Überwachung der Zellspannung der Brennstoffzellen ist somit eindeutig feststellbar, welche der Brennstoffzellen einen Defekt in der Betriebsgasversorgung aufweist. In gewissem Umfang kann aus dem Zeitunterschied im Abfall der Zellspannung im Vergleich zu einer intakten Brennstoffzelle sogar auf die Größe des Defektes geschlossen werden.

Für eine zuverlässige Überwachung der Brennstoffzellen auf eine mangelhafte Betriebsgasversorgung kann bereits der Vergleich der Zeiten ausreichend sein, in der die Zellspannung der einzelner Brennstoffzellen oder jeweils einer Gruppe von Brennstoffzellen von einem ersten Wert zu Beginn der Spülung auf einen zweiten Wert abgefallen ist. Eine mangelhaft versorgte Brennstoffzelle zeichnet sich dann im Vergleich mit einer intakten Brennstoffzelle durch eine längere Zeit für den Abfall auf den zweiten Wert aus.

Alternativ kann es auch bereits ausreichend sein, wenn die Werte der Zellspannung der einzelnen Brennstoffzellen oder jeweils einer Gruppe von Brennstoffzellen nach Ablauf einer vorbestimmten Zeit nach Beginn des Spülens mit dem Inertgas verglichen werden. Eine mangelhaft versorgte Brennstoffzelle zeichnet sich dann im Vergleich mit einer intakten Brennstoffzelle durch einen größeren Wert der Zellspannung nach Ablauf der vorbestimmten Zeit aus.

Je nachdem, ob die Brenngasseite oder die Oxidationsgasseite auf eine Mangelversorgung untersucht werden soll, wird der Anodengasraum oder der Kathodengasraum der Brennstoffzellen mit dem Inertgas gespült. Das Verfahren ist hierbei nicht nur geeignet zum Lokalisieren einer schon vorbekannten Mangelversorgung einer Brennstoffzelle innerhalb einer Brennstoffzellenanordnung, sondern auch zum erstmaligen Erkennen der Mengelversorgung.

Von besonderem Vorteil ist es, wenn das Verfahren im Leerlaufbetrieb der Brennstoffzellen durchgeführt wird. Als Leerlaufbetrieb wird der Zustand der Brennstoffzellen bezeichnet, in dem sie von einer Betriebslast oder einem Entladewiderstand abgekoppelt sind. Während des Leerlaufbetriebes fließt somit im Wesentlichen kein Strom durch die Brennstoffzellenanordnung. Hierdurch baut sich zum einen beim Unterbrechen der Betriebsgaszufuhr an den Brennstoffzellen als Zellspannung die relativ hohe Leerlaufspannung auf und zum anderen sinkt die Zellspannung der Brennstoffzellen langsamer, wodurch eine defekte Brennstoffzelle leichter erkannt und lokalisiert werden kann.

Auf der anderen Seite kann die Zeit für den Abfall der Zellspannung dadurch wiederum verkürzt werden, dass während der Überwachung des zeitlichen Verlaufes der Zellspannung der Gasraum kontinuierlich gespült wird. Hierdurch wird die Verdrängung und Abfuhr des Betriebsgases in dem Gasraum beschleunigt und somit die Zeit für den Abfall der Zellspannung verkürzt.

Brennstoffzellen können somit unmittelbar nach der Montage auch ohne Betriebslast auf eine korrekte Betriebsgasversorgung überprüft werden. Außerdem können vorübergehend außer Betrieb gesetzte Brennstoffzellen vor einem Neubetrieb auf eine korrekte Betriebsgasversorgung überprüft werden und somit eine potenzielle Gefährdung von Brennstoffzellen vermieden werden.

Vorteilhafterweise wird das Verfahren nach einem regulären Betrieb der Brennstoffzellenanordnung durchgeführt. Der erste Schritt des Verfahrens, nämlich die Beaufschlagung des Anodengasraums mit Brenngas und des Kathodengasraums mit Oxidationsgas geschieht dann schon im regulären Betrieb der Brennstoffzellenanordnung. Das Verfahren kann somit sehr leicht und ohne Zustandsänderung der Brennstoffzellenanordnung aus dem laufenden regulären Betrieb heraus gestartet werden. Es ist auch möglich, das Verfahren während des regulären Betriebs durchzuführen, wobei dann der reguläre Betrieb der Brennstoffzellenanordnung während des Absinkens der Spannung der Anordnung während der Durchführung des Verfahrens unterbrochen wird.

Mit besonders wenig Aufwand wird das Verfahren als Abschaltverfahren für die Brennstoffzellenanordnung durchgeführt. Bei dieser Ausgestaltung der Erfindung bedeutet die Durchführung des Verfahrens gegenüber dem regulären Abschalten der Anordnung kaum zusätzlichen Aufwand, da schon zum Abschalten die Betriebsgaszufuhr zu den Brennstoffzellen unterbrochen wird und die Brennstoffzellen in der Regel mit einem Inertgas gespült werden.

In einer weiteren vorteilhaften Ausgestaltung des Verfahrens wird der Gasdruck innerhalb der beiden Gasräume der Brennstoffzellen vor dem Spülen mit dem Inertgas auf einen vorbestimmten Wert gebracht. Brennstoffzellen werden mit einem relativ hohen Betriebsgasdruck betrieben, beispielsweise zwischen 2 und 3 Bar (absoluter Druck). Zur Durchführung des erfindungsgemäßen Verfahrens ist ein so hoher Betriebsgasdruck nicht nur nicht erforderlich, sondern sogar nachteilig, da hierdurch für das Absinken der Zellspannung verhältnismäßig viel Zeit benötigt wird. Eine Verkürzung dieser Zeit ist jedoch dadurch möglich, dass die Gasräume der Brennstoffzellen vor dem Spülen mit dem Inertgas beispielsweise druckentlastet werden. Das Einstellen der Betriebsgasdrücke in den Gasräumen auf einen vorbestimmten Wert bringt außerdem den Vorteil, dass das Verfahren unabhängig von einem eventuell schwankenden Betriebsgasdruck bei bekannten Drücken durchgeführt werden kann, für die Erfahrungswerte vorliegen. Dies erleichtert die Abschätzung der Größe eines eventuell vorliegenden Defektes.

In einer vorteilhaften Ausgestaltung der Erfindung wird als Inertgas Stickstoff (N2) verwendet. Stickstoff ist besonders preiswert und führt zu keiner Schädigung der Materialien innerhalb einer Brennstoffzelle.

Die Zellspannungsüberwachung sollte gemäß der gewünschten Genauigkeit der Lokalisierung der Mangelversorgung erfolgen. Bei einer Überwachung der Zellspannung jeder einzelnen Brennstoffzelle der Brennstoffzellenanordnung ist eine genaue Lokalisierung einer defekten Brennstoffzelle möglich. Auch bei einer gröberen Überwachung, z.B. durch Überwachung der Ausgangsspannung der Zellen in Gruppen jeweils mehrerer Brennstoffzellen, kann eine Mangelversorgung erkannt und eingegrenzt werden. Hierdurch verringert sich der Messaufwand gegenüber einer Einzelzellüberwachung erheblich.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: eine Brennstoffzellenanlage zur Durchführung des Verfahrens;
- FIG 2: ein Flussdiagramm zum Ablauf des Verfahrens;
- FIG 3: einen Zellspannungsverlauf zweier intakter und einer defekten Brennstoffzelle während der Durchführung des Verfahrens;

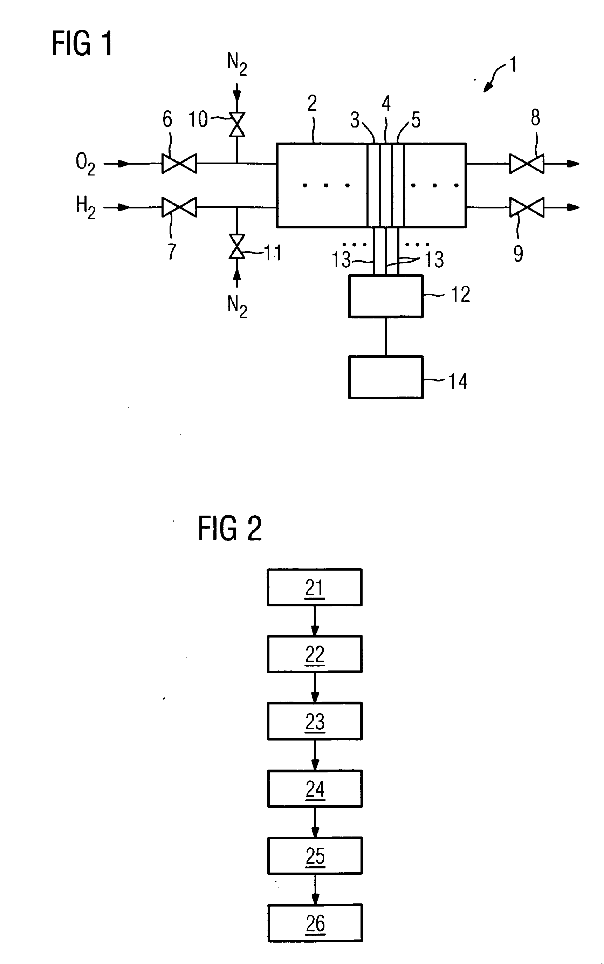

FIG 1 zeigt in schematischer Darstellung eine Brennstoffzellenanlage 1, die eine Brennstoffzellenanordnung 2 mit einer Anzahl von Brennstoffzellen umfasst, von denen der besseren Übersichtlichkeit wegen nur drei Brennstoffzellen 3, 4, 5 dargestellt sind. Die Brennstoffzellen sind planare Brennstoffzellen, die zu einem Brennstoffzellenstapel gestapelt sind.

Die Brennstoffzellenanlage umfasst außerdem ein Oxidationsgaseinlassventil 6, ein Brenngaseinlassventil 7, ein Oxidationsgasauslassventil 8, ein Brenngasauslassventil 9 , ein erstes Inertgaseinlassventil 10 für die Oxidationsgasseite der Brennstoffzellen und ein zweites Inertgaseinlassventil 11 für die Brenngasseite der Brennstoffzellen. Des Weiteren umfasst die Brennstoffzellenanlage eine Zellspannungsüberwachungseinrichtung 12 und eine Auswerteeinheit 14 in Form eines Computers mit einem angeschlossenen Bildschirm.

Über das Oxidationsgaseinlassventil 6 ist den Kathodengasräumen der Brennstoffzellen der Brennstoffzellenanordnung 2 reiner Sauerstoff (O2) als Oxidationsgas zuführbar und über das Oxidationsgasauslassventil 8 der Restsauerstoff abführbar, wobei die Anodengasräume sämtlicher Brennstoffzellen der Brennstoffzellenanordnung 2 parallel von dem Sauerstoff (O2) durchströmbar sind.

Über das Brenngaseinlassventil 7 ist den Anodengasräumen der Brennstoffzellen der Brennstoffzellenanordnung 2 reiner Wasserstoff (H2) als Brenngas zuführbar und über das Brenngasauslassventil 9 der Restwasserstoff abführbar, wobei die Anodengasräume sämtlicher Brennstoffzellen der Brennstoffzellenanordnung 2 parallel von dem Wasserstoff (H2) durchströmbar sind.

Über das erstes Inertgaseinlassventil 10 ist den Kathodengasräumen der Brennstoffzellen und über das zweite Inertgaseinlassventil 11 ist den Anodengasräumen der Brennstoffzellen Stickstoff (N2) als Inertgas zuführbar.

FIG 2 zeigt ein Ablaufdiagramm eines Verfahrens zum Lokalisieren einer Brennstoffzelle mit einer mangelhaften Betriebsgasversorgung innerhalb der Brennstoffzellenanordnung 2. In einem ersten Verfahrensschritt 21 wird während des regulären Betriebs der Brennstoffzellenanordnung 2 der Anodengasraum der Brennstoffzellen mit reinem Wasserstoff und der Kathodengasraum der Brennstoffzellen mit reinem Sauerstoff beaufschlagt.

In einem nachfolgenden Verfahrensschritt 22 wird die Brennstoffzellenanordnung 1 von einer in den Figuren nicht gezeigten Betriebslast - z.B. einem Antrieb eines Fahrzeugs - elektrisch getrennt und in den Leerlaufbetrieb gebracht.

Anschließend wird in einem Verfahrensschritt 23 die Betriebsgaszufuhr zu den Gasräumen der Brennstoffzellen der Brennstoffzellenanordnung 2 unterbrochen, indem das Oxidationsgaseinlassventil 6 und das Brenngaseinlassventil 7 der Brennstoffzellenanlage 1 geschlossen werden. Die Inertgaseinlassventile 10, 11 der Brennstoffzellenanlage sind zu diesem Zeitpunkt ebenfalls geschlossen. An den Brennstoffzellen der Brennstoffzellenanordnung 2 stellt sich hierdurch die Leerlaufzellspannung ein.

Im anschließenden Verfahrensschritt 24 wird durch Öffnen des Brenngasauslassventils 9 der Gasdruck innerhalb des Anodengasraums der Brennstoffzellen von einem Betriebsdruck von 2,3 Bar Wasserstoff auf 1,6 Bar entspannt (jeweils absoluter Druck). Ebenfalls wird durch Öffnen des Oxidationsgasauslassventil 8 der Gasdruck des im Kathodengasraum befindlichen Sauerstoffs entspannt und von einem Betriebsdruck von 2,6 Bar auf 1,6 Bar gebracht. Anschließend wird das Brenngasauslassventil 9 und das Oxidationsgasauslassventil 8 geschlossen, so dass die Anodengasräume und die Kathodengasräume der Brennstoffzellen der Brennstoffzellenanordnung 1 hermetisch abgeschlossen sind.

Zur Prüfung auf eine mangelhafte Betriebsgasversorgung auf der Kathoden- bzw. Oxidationsgasseite der Brennstoffzellen wird im nächsten Schritt 25 des Verfahrens das Inertgaseinlassventil 10 geöffnet und der Kathodengasraum der Brennstoffzellen mit Stickstoff (N2) gespült. Hierbei wird der Stickstoff mit einem Druck von 2 Bar in die Kathodengasräume der Brennstoffzellen eingelassen. Während der Spülung werden die Zellspannungen der Brennstoffzellen überwacht.

Nach Beginn der Spülung sinken die Zellspannungen der Brennstoffzellen der Brennstoffzellenanordnung 2 ab, da der Stickstoff mit der Zeit den Sauerstoff aus den Kathodengasräumen verdrängt und abführt und somit immer weniger Sauerstoff für die elektrochemische Reaktion mit dem Wasserstoff zur Verfügung steht.

Während der Spülung der Kathodengasräume mit Stickstoff und der Entladung der Brennstoffzellen wird die Zellspannung der Brennstoffzellen über Messleitungen 13 permanent von der Zellspannungsüberwachungseinrichtung 12 erfasst und überwacht. Die Werte der Brennstoffzellenspannungen werden von der Brennstoffzellenüberwachungseinrichtung 12 an die Auswerteeinheit 14 übermittelt, die diese Werte in periodischen Intervallen speichert und außerdem auf einem Bildschirm ausgibt.

In einem letzten Verfahrensschritt 26 werden die Gasräume der Brennstoffzellen der Brennstoffzellenanordnung 1 mit Stickstoff geflutet. Nach dem anschließenden Schließen des Inertgaseinlassventils 10 sind somit die Gasräume der Brennstoffzellen der Brennstoffzellenanordnung 1 hermetisch gegenüber der Außenwelt verschlossen.

Für eine Überprüfung der Anodengasräume der Brennstoffzellen gilt im Grunde der gleiche Verfahrensablauf, wobei jedoch statt der Kathodengasräume die Anodengasräume der Brennstoffzellen mit Stickstoff gespült werden.

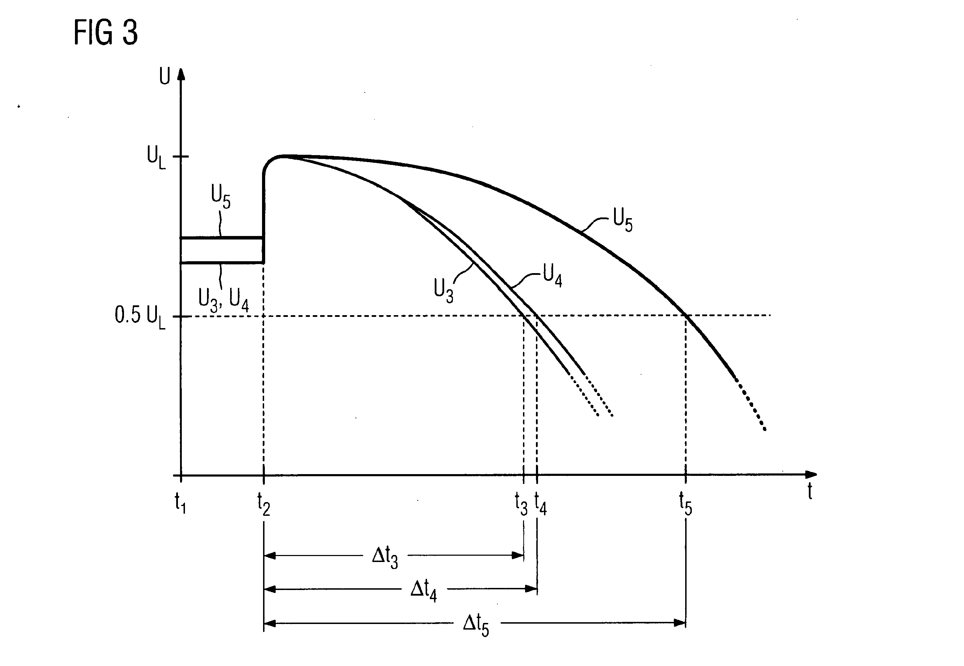

FIG 3 zeigt für den vorstehend geschilderten Verfahrensablauf den zeitlichen Verlauf der Zellspannungen U₃, U₄, U₅ der Brennstoffzellen 3, 4, 5 unter der Annahme, dass die Brennstoffzellen 3 und 4 fehlerfrei mit Betriebgas versorgt werden, die Brennstoffzelle 5 dagegen mangelhaft mit Betriebgas versorgt wird.

Im Zeitraum vom Zeitpunkt t1 bis zum Zeitpunkt t2 wird gemäß Verfahrensschritt 21 bei den Brennstoffzellen 3, 4, 5 der Anodengasraum mit Wasserstoff und der Kathodengasraum mit Sauerstoff beaufschlagt. Zum Zeitpunkt t2 wird gemäß Verfahrensschritt 22 die Betriebsgaszufuhr zu den Gasräumen unterbrochen und gemäß Verfahrensschritt 23 die Brennstoffzellen in Leerlaufbetrieb gebracht. Hierdurch steigt die Zellspannung der Brennstoffzellen 3, 4, 5 auf die Leerlaufspannung UL. Außerdem wird im Zeitpunkt t2 gemäß Verfahrensschritt 24 mit der Spülung der Kathodengasräume der Brennstoffzellen 3,4 ,5 mit Stickstoff N2 begonnen.

Nach Beginn der Spülung im Zeitpunkt t2 sinkt die Zellspannung U₃, U₄ der intakten Brennstoffzellen 3, 4 bis zum Zeitpunkt t3 bzw. t4 auf etwa die Hälfte der Leerlaufspannung UL ab, wobei t3 und t4 in etwa zeitlich zusammenfallen. Im Unterschied hierzu sinkt die Zellspannung U₅ der Brennstoffzelle 5 nach Beginn der Spülung wesentlich langsamer ab als die Zellspannung der intakten Zellen 3, 4 und es dauert bis zum Zeitpunkt t5 bis die Zellspannung U₅ der defekten Brennstoffzelle 5 auf die Hälfte der Leerlaufspannung UL abgesunken ist. Da die Zeitspannen Δt3 = t3 - t2 und Δt4 = t4 - t2 wesentlich kleiner sind als die Zeitspanne Δt5 = t5 - t2, kann auf einen Defekt in der Brennstoffzelle 5 geschlossen werden.

Alternativ kann natürlich auch der Wert der Zellspannungen der Brennstoffzellen 3, 4, 5 nach Ablauf einer vorbestimmten Zeitspanne nach Beginn der Spülung, z.B. zum Zeitpunkt t3, als Kriterium für die Feststellung, ob eine Brennstoffzelle intakt oder defekt ist, herangezogen werden. Die defekte Brennstoffzelle 5 weist beispielsweise zum Zeitpunkt t3 einen im Vergleich zu den intakten Brennstoffzellen wesentlich größeren Wert der Zellspannung auf.

Zweckmäßigerweise erfolgt die Spülung derart, dass die Zellspannung intakter Brennstoffzellen nach Beginn der Spülung innerhalb von 4 bis 6 Minuten von Leerlaufzellspannung UL auf die Hälfte der Leerlaufzellenspannung abgefallen ist (d.h. Δt3 = 4 bis 6 min). Eine solche Entladungsgeschwindigkeit hat sich in Versuchen als besonders günstig zum Erkennen eines Defektes erwiesen.

## Patentansprüche

1. Verfahren zur Lokalisierung einer mangelhaften Betriebsgasversorgung einer Brennstoffzelle (3,4,5) in einer Brennstoffzellenanordnung (2) mit einer Anzahl von Brennstoffzellen, bei dem
a) der Anodengasraum der Anzahl von Brennstoffzellen (3,4,5) mit einem Brenngas (H₂) und der Kathodengasraum der Anzahl von Brennstoffzellen (3,4,5) mit einem Oxidationsgas (O₂) beaufschlagt wird,
b) die Betriebsgaszufuhr zu beiden Gasräumen der Brennstoffzellen (3,4,5) unterbrochen wird,
c) einer der beiden Gasräume der Brennstoffzellen (3,4,5) mit einem Inertgas (N₂) gespült wird,
d) der zeitliche Verlauf der Zellspannung (U₃, U₄, U₅) der Brennstoffzellen (3,4,5) überwacht und eine mangelhaft versorgte Brennstoffzelle (3,4,5) durch einen im Vergleich zu einer intakten Brennstoffzelle (3,4,5) langsameren Abfall der Zellspannung erkannt wird.

2. Verfahren nach Anspruch 1, bei dem bei der Überwachung des zeitlichen Verlaufs der Zellspannung (U₃, U₄, Uₛ) der Brennstoffzellen (3,4,5) die Zeiten (Δt3, Δt4, Δt5) verglichen werden, in der die Zellspannung (U₃, U₄, U₅) der einzelnen Brennstoffzellen oder jeweils einer Gruppe von Brennstoffzellen von einem ersten Wert (UL) zu Beginn der Spülung mit dem Inertgas (N₂) auf einen zweiten Wert (0,5*UL) abgefallen ist.

3. Verfahren nach Anspruch 1, bei dem bei der Überwachung des zeitlichen Verlaufs der Zellspannung (U₃, U₄, U₅) der Brennstoffzellen (3,4,5) die Werte der Zellspannung der einzelnen Brennstoffzellen oder jeweils einer Gruppe von Brennstoffzellen nach Ablauf einer vorbestimmten Zeit (Δt3) nach Beginn des Spülens mit dem Inertgas (N₂) verglichen werden.

4. Verfahren nach einem der vorhergehenden Ansprüche, durchgeführt im Leerlaufbetrieb der Brennstoffzellen.

5. Verfahren nach einem der vorhergehenden Ansprüche, bei dem während der Überwachung des zeitlichen Verlaufes der Zellspannung der Gasraum kontinuierlich gespült wird.

6. Verfahren nach einem der vorhergehenden Ansprüche, durchgeführt nach einem regulären Betrieb der Brennstoffzellenanordnung (2), wobei die Beaufschlagung des Anodengasraums mit Brenngas (H₂) und des Kathodengasraums mit Oxidationsgas (O₂) während des regulären Betriebs erfolgt.

7. Verfahren nach einem der vorhergehenden Ansprüche, durchgeführt als Abschaltverfahren für die Brennstoffzellenanordnung (2).

8. Verfahren nach einem der vorhergehenden Ansprüche, bei dem der Gasdruck innerhalb der beiden Gasräume der Brennstoffzellen (3,4,5) vor dem Spülen mit dem Inertgas (N₂) auf einen vorbestimmten Wert gebracht wird.

9. Verfahren nach einem der vorhergehenden Ansprüche, bei dem die Zellspannung (U₃, U₄, U₅) einer jeden Zelle (3,4,5) einzeln überwacht wird.

10. Verfahren nach einem der Ansprüche 1 bis 8, bei dem die Zellspannung der Zellen in Gruppen von mehreren Zellen überwacht wird.

11. Verfahren nach einem der vorhergehenden Ansprüche, bei dem als Inertgas Stickstoff (N2) verwendet wird.

12. Verfahren nach einem der vorhergehenden Ansprüche, angewendet auf Brennstoffzellen, die für den Betrieb mit reinem Sauerstoff (02) und mit reinem Wasserstoff (H2) eingerichtet sind.

13. Verfahren nach einem der vorhergehenden Ansprüche, angewendet auf PEM-Brennstoffzellen.

## Claims

1. Method for localization of an insufficient operating gas supply for a fuel cell (3, 4, 5) in a fuel cell arrangement (2) having a number of fuel cells, in which
a) the anode gas area of the number of fuel cells (3, 4, 5) has a fuel (H₂) applied to it and the cathode gas area of the number of fuel cells (3, 4, 5) has an oxidation gas (O₂) added to it,
b) the operating gas supply to both gas areas of the fuel cells (3, 4, 5) is interrupted,
c) one of the two gas areas in the fuel cells (3, 4, 5) is purged with an inert gas (N₂),
d) the time profile of the cell voltage (U₃, U₄, U₅) of the fuel cells (3, 4, 5) is monitored and a fuel cell (3, 4, 5) with an inadequate supply is identified by a cell Voltage decreasing more slowly than an intact fuel cell (3, 4, 5).

2. Method according to Claim 1, in which, during the monitoring of the time profile of the cell voltage (U₃, U₄, U₅) of the fuel cells (3, 4, 5), the times (Δt3, Δt4, Δt5) are compared in which the cell voltage (U₃, U₄, U₅) of the individual fuel cells or of a respective group of fuel cells has fallen from a first value (UL) at the start of purging with the inert gas (N₂) to a second value (0.5*UL).

3. Method according to Claim 1, in which, during the monitoring of the time profile of the cell voltage (U₃, U₄, U₅) of the fuel cells (3, 4, 5), the values of the cell voltage of the individual fuel cells or of a respective group of fuel cells are compared after a predetermined time (Δt3) has elapsed since the start of purging with the inert gas (N₂).

4. Method according to one of the preceding claims, carried out when the fuel cells are being operated with no load.

5. Method according to one of the preceding claims, in which, during the monitoring of the time profile of the cell voltage, the gas area is continuously purged.

6. Method according to one of the preceding claims, carried out after normal operation of the fuel cell arrangement (2), with fuel gas (H₂) being applied to the anode gas area, and oxidation gas (O₂) being applied to the cathode gas area, during normal operation.

7. Method according to one of the preceding claims, carried out as a method for turning off the fuel cell arrangement (2).

8. Method according to one of the preceding claims,
in which the gas pressure within the two gas areas of the fuel cells (3, 4, 5) is changed to a predetermined value before purging with the inert gas (N₂).

9. Method according to one of the preceding claims, in which the cell voltage (U₃, U4, U₅) of each cell (3, 4, 5) is monitored individually.

10. Method according to one of Claims 1 to 8, in which the cell voltage of the cells is monitored in groups of a plurality of cells.

11. Method according to one of the preceding claims, in which nitrogen (N₂) is used as inert gas.

12. Method according to one of the preceding claims, applied to fuel cells which are designed for operation with pure oxygen (O₂) and with pure hydrogen (H₂).

13. Method according to one of the preceding claims, applied to PEM fuel cells.

## Revendications

1. Procédé de localisation d'une alimentation défectueuse en gaz de fonctionnement d'une pile ( 3, 4, 5 ) à combustible d'un dispositif ( 2 ) de piles à combustible ayant un certain nombre de piles à combustible, dans lequel
a) on alimente en un gaz ( H₂ ) combustible la chambre de gaz d'anode du nombre de piles ( 3, 4, 5 ) à combustible et en un gaz ( O₂ ) d'oxydation la chambre de gaz de cathode du nombre de piles ( 3, 4, 5 ) à combustible,
b) on interrompt l'envoi du gaz de fonctionnement aux deux chambres de gaz des piles ( 3, 4, 5 ) à combustible,
c) on balaye l'une des deux chambres de gaz des piles ( 3, 4, 5 ) à combustible par un gaz ( N₂) inerte,
d) on contrôle la variation dans le temps de la tension ( U₃, U₄, U₅ ) des piles ( 3, 4, 5 ) à combustible et on reconnaît une pile ( 3, 4, 5 ) à combustible alimentée d'une manière défectueuse par une chute de la tension de la pile plus lente que celle d'une pile (3, 4, 5) à combustible intacte.

2. Procédé suivant la revendication 1, dans lequel, lors du contrôle de la variation dans le temps de la tension ( U₃, U₄, U₅ ) des piles ( 3, 4, 5 ) à combustible, on compare les temps ( Δt3, Δt4, Δt5 ), pendant lesquels la tension ( U₃, U₄, U₅ ) des diverses piles à combustible ou respectivement d'un groupe de piles à combustible chute, d'une première valeur ( UL ) au début du balayage par le gaz (N₂) inerte à une deuxième valeur ( 0,5*UL ).

3. Procédé suivant la revendication 1, dans lequel, lors du contrôle de la variation dans le temps de la tension ( U₃, U₄, U₅ ) des piles ( 3, 4, 5 ) à combustible, on compare les valeurs de la tension des diverses piles à combustible ou de respectivement un groupe de piles à combustible, après écoulement d'une durée ( Δt3 ) déterminée à l'avance, après le début du balayage par le gaz ( N₂ ) inerte.

4. Procédé suivant l'une des revendications précédentes, effectué en fonctionnement à marche à vide des piles à combustible.

5. Procédé suivant l'une des revendications précédentes, dans lequel, pendant le contrôle de la variation dans le temps de la tension de la pile, on balaye en continu la chambre de gaz.

6. Procédé suivant l'une des revendications précédentes, effectué après un fonctionnement régulier du dispositif ( 2 ) de piles à combustible, l'alimentation de la chambre de gaz d'anode en gaz ( H₂ ) combustible et de la chambre de gaz de cathode en gaz ( O₂ ) d'oxydation s'effectuant pendant le fonctionnement régulier.

7. Procédé suivant l'une des revendications précédentes, effectué comme procédé d'arrêt du dispositif ( 2 ) de piles à combustible.

8. Procédé suivant l'une des revendications précédentes,
dans lequel on met la pression du gaz dans les deux chambres de gaz des piles ( 3, 4, 5 ) à combustible à une valeur déterminée à l'avance, avant le balayage par le gaz ( N₂ ) inerte.

9. Procédé suivant l'une des revendications précédentes, dans lequel on contrôle individuellement la tension ( U₃, U₄, U₅ ) de chaque pile ( 3, 4, 5 ).

10. Procédé suivant l'une des revendications 1 à 8, dans lequel on contrôle la tension des piles par groupe de plusieurs piles.

11. Procédé suivant l'une des revendications précédentes, dans lequel on utilise de l'azote ( N2 ) comme gaz inerte.

12. Procédé suivant l'une des revendications précédentes, appliqué à des piles à combustible, qui sont conçues pour fonctionner avec de l'oxygène (02) pur et avec de l'hydrogène ( H2 ) pur.

13. Procédé suivant l'une des revendications précédentes, appliqué à des piles à combustible PEM.
